# EUROPÄISCHE PATENTSCHRIFT

(11) **EP 2 153 175 B1**
(45) Veröffentlichungstag und Bekanntmachung des Hinweises auf die Patenterteilung: **04.09.2013**
(21) Anmeldenummer: 08749694.9
(22) Anmeldetag: 24.04.2008
(51) Int. Cl.: G01C 21/34, G08G 1/0968

(54) **VERFAHREN FÜR DEN BETRIEB EINES NAVIGATIONSSYSTEMS UND NAVIGATIONSSYSTEM FÜR EIN KRAFTFAHRZEUG**
METHOD FOR OPERATING A NAVIGATION SYSTEM AND NAVIGATION SYSTEM FOR A MOTOR VEHICLE
PROCÉDÉ DESTINÉ AU FONCTIONNEMENT D'UN SYSTÈME DE NAVIGATION ET SYSTÈME DE NAVIGATION POUR UN VÉHICULE AUTOMOBILE

(30) Priorität: 06.06.2007 DE 102007026320
(43) Veröffentlichungstag der Anmeldung: 17.02.2010
(73) Patentinhaber: Siemens Enterprise Communications GmbH & Co. KG, 81379 München (DE)
(72) Erfinder: SCHREY, Rolf, 41189 Mönchengladbach (DE); BOZIONEK, Bruno, 33178 Borchen (DE); ZIMMERMANN, Rainer, 33106 Paderborn (DE)
(74) Vertreter: Fritzsche, Thomas
(86) Internationale Anmeldenummer: PCT/EP2008/054980
(87) Internationale Veröffentlichungsnummer: WO 2008/148606

(56) Entgegenhaltungen:
- EP-A- 1 297 982
- WO-A-97/11440
- DE-A1- 10 104 499
- US-A- 5 815 824

## Beschreibung

Die Erfindung betrifft ein Verfahren für den Betrieb eines Navigationssystems für ein Kraftfahrzeug gemäß dem Oberbegriff des Patentanspruchs 1, und ein Navigationssystem für ein Kraftfahrzeug gemäß dem Oberbegriff des Patentanspruchs 13.

Der Betrieb von Kraftfahrzeugen mit Verbrennungsmotor ist mit Emissionen verbunden, welche insbesondere bei höheren Konzentrationen (z.B. von Schadstoffen in der Atemluft) Beeinträchtigungen bei Menschen, Tieren und der Umwelt hervorrufen können. Aus diesem Grund werden Kraftfahrzeuge mit technischen Einrichtungen versehen, um die Emissionen (z.B. Abgase, Feinstaub und Lärm) zu verringern. Dennoch werden gerade in Ballungsgebieten regelmäßig die gesetzlichen Grenzwerte für die Luftschadstoffbelastung vor allem hinsichtlich der Feinstaubbelastung überschritten, so dass vermehrt sog. "Umweltzonen" ausgewiesen werden, die nur mit besonders schadstoffarmen Kraftfahrtzeugen befahren werden dürfen. Dazu werden die meisten Kraftfahrzeuge in zur Zeit vier Gruppen (Schadstoffklassen) eingeteilt, wobei ein Verkehrsschild am Rande einer solchen "Umweltzone" Auskunft darüber gibt, welche Kraftfahrzeuge gemäß ihrer Schadstoffklasse in die Zone einfahren dürfen, und welche nicht.

Zur Kontrolle der Regelung werden die Kraftfahrzeuge mit verschiedenfarbigen Plaketten gekennzeichnet, aus denen die dem jeweiligen Kraftfahrzeug zugeordnete Schadstoffklasse hervor gehen.

Ziel des Verfahrens ist es, solche Zonen und Bereiche des Verkehrswegenetzes (Straßennetzes), die in Zonen (Umweltzonen) mit einer starken Emissionsbelastung liegen, vom Betrieb solcher Kraftfahrzeuge zu entlasten, die in erheblicher Weise zur Luftschadstoffbelastung beitragen.

An dem geschilderten Verfahren hat sich als nachteilig erwiesen, dass insbesondere ortsunkundige Verkehrsteilnehmer die genaue geografische Lage der Umweltzonen nicht kennen und daher versehentlich und verbotswidrig mit ihren Kraftfahrzeugen in solche Umweltzonen einfahren, obwohl das jeweilige Kraftfahrzeug nicht die dazu erforderliche Schadstoffklasse aufweist. Ein weiterer Nachteil besteht darin, dass Kraftfahrzeuge, wie beispielsweise Hybridfahrzeuge, je nach Betriebsweise (Betriebsmodus) ein differenziertes Emissionsverhalten aufweisen, welches durch die starre Zuordnung einer einzigen Schadstoffklasse zur einem Kraftfahrzeug nicht sinnvoll abgebildet werden kann.

In EP 1297982 A2 ist gemäß Oberbegriff des Anspruchs 13 ein Navigationssystem eines Hybrid-Autos beschrieben, das eine Route abruft um festzustellen, ob irgendein beschränkter Bereich, der für Automobile verboten ist, die Abgase emittieren, auf der Route vorhanden ist oder nicht. Bevor das Hybrid-Auto an dem beschränkten Bereich ankommt, wird ein Elektromotor durch einen Benzinmotor angetrieben, um einen Batterieabschnitt aufzuladen. Nachdem das Hybrid-Auto an dem beschränkten Bereich ankommt, wird nur der Elektromotor durch elektrische Energie des Batterieabschnitts betrieben, so dass das Hybrid-Auto durch den beschränkten Bereich passieren kann.

Es ist daher eine Aufgabe der vorliegenden Erfindung, die Führer von Kraftfahrzeugen bei der Beachtung der aus den Umweltzonen und Schadstoffklassen ihrer Kraftfahrzeuge resultierenden Durchfahrtsbeschränkungen mit einem weniger aufwendigen Navigationssystem zu unterstützen. Dabei ist es eine weitere Aufgabe der Erfindung, Kraftfahrzeuge mit verschiedenen Betriebsmodi in das Konzept der Umweltzonen zu integrieren.

Zur Lösung der Aufgabe wird ein Verfahren gemäß Patentanspruch 1 und ein Navigationssystem gemäß Patentanspruch 13 vorgeschlagen.

Die Lösung der Aufgabe sieht dabei ein Verfahren für den Betrieb eins Navigationssystems für ein Kraftfahrzeug in einem Verkehrswegenetz vor, wobei zumindest eine Zone des Verkehrswegenetzes mit einer schadstoffklassenabhängigen Durchfahrtsbeschränkung versehen ist, und wobei dem Kraftfahrzeug zumindest eine Schadstoffklasse zugeordnet ist. Dabei werden zunächst in einer Datenbasis des Navigationssystems Informationen über die geografische Lage der zumindest einen Zone und über die für die Durchfahrt berechtigten Kraftfahrzeuge in dieser Zone zumindest geforderte Schadstoffklasse oder Schadstoffklassen gespeichert, wobei in dieser oder in einer anderen Datenbasis des Navigationssystems weiterhin zumindest eine Information über die zumindest eine Schadstoffklasse des Kraftfahrzeuges mit dem Navigationssystem eingegeben wird. Die eingegebenen Informationen werden für die Zielführung berücksichtigt, wobei eine Zielführung in oder durch die Zone vermieden wird, sofern die zumindest eine Schadstoffklasse des Kraftfahrzeugs von schadstoffklassenabhängigen Durchfahrtsbeschränkung in der Zone betroffen ist. Durch dieses Verfahren wird das Kraftfahrzeug derart navigiert, dass die Durchfahrtsbeschränkungen (Durchfahrtsverbote; Sperrungen) der Zone (Umweltzone) beachtet werden, wobei das Navigationssystem durch einen Vergleich der Schadstoffklasse des genutzten Kraftfahrzeuges mit den für die Zone "erlaubten" bzw. "gesperrten" Schadstoffklassen eine Beachtung der gesetzlichen Bestimmungen gewährleistet. Der Begriff "Schadstoffklasse" bezeichnet dabei allgemein eine Bedingung oder einen Grenzwert für eine Emission, wobei bei einer Mehrzahl von Emissions-Typen (z.B. für unterschiedliche gasförmige Schadstoffe, Geräuschemission, aber auch tatsächliches Fahrzeuggewicht etc.) diese entweder zu einer kombinierten Schadstoffklasse zusammengefasst werden können oder aber als Einzel-Schadstoffklassen jeweils einzeln gemäß Ihrer Grenzwerte beachtet werden können. Im letzteren Fall wird eine Zielführung in die Umweltzone vorteilhaft dann vermieden, wenn zumindest eine der (derzeitigen) Schadstoffklassen bzw. einer der Emissionwerte des Kraftfahrzeuges zu der Durchfahrtsbeschränkung inkompatibel ist. In dem zweiten Schritt wird die Schadstoffklasse aus einem fahrzeugseitigen Informationsspeicher in das Navigationssystem übertragen, wobei als das Navigationssystem ein mobiles Navigationssystem (NSYS) wird und die Information über die zumindest eine Schadstoffklasse durch das Navigationssystem berührungslos aus dem fahrzeugseitigen Informationsspeicher ausgelesen wird. Insbesondere für mobile Navigationsgeräte ist es erfindungsgemäß vorgesehen, dass diese Informationen drahtlos von einem mit dem Fahrzeug verbundenen Informationsspeicher zu dem Navigationssystem übermittelt werden. Vorteilhaft kann dazu ein RFID-Transponder verwendet werden, der beispielsweise in die dem Fahrzeug amtsseitig zugeteilte Schadstoffplakette integriert wird. Eine solche Plakette (meist farbig gekennzeichnet) ist ohnehin mit einer Information über die Schadstoffklasse des Kraftfahrzeugs versehen, so dass neben der visuellen Wirkung der Plakette auch eine drahtlose Informationsübertragung vorgesehen werden kann. Selbstverständlich ist auch eine andere Funkverbindung (beispielsweise nach dem Bluetooth-Standard IEEE 802.15.1) oder eine optische Abtastung, beispielsweise mittels eines dem Navigationsgerätes zugeordneten "Barcode-Lesers" und einem entsprechenden Aufdruck auf der Plakette, möglich. In Ausführungsformen der Erfindung können die für den zweiten Schritt einzugebenden Informationen über die Schadstoffklasse des Kraftfahrzeuges auf verschiedenen Wegen an das Navigationssystem übermittelt bzw. in dieses eingegeben werden, wobei sich ein besonders einfacher Weg ergibt, indem diese Informationen manuell in das Navigationssystem eingegeben werden. Eine komfortable Alternative gemäß einer weiteren Ausführungsform ergibt sich, indem die Schadstoffklasse vorzugsweise über einen fahrzeugseitigen Datenbus auf elektronischem Wege von einem Informationsspeicher des Kraftfahrzeugs (beispielsweise Motormanagement-System oder Fahrzeugmanagement-System) zu dem Navigationssystem übermittelt wird.

Die Lösung der Aufgabe sieht weiterhin ein Navigationssystem für ein Kraftfahrzeug vor, welches mit einer Datenbasis für ein Verkehrswegenetz ausgestattet ist. Die Datenbasis des Navigationssystems ist dabei zur Speicherung zumindest einer schadstoffklassenabhängigen Durchfahrtsbeschränkung für zumindest eine Zone des Verkehrswegenetzes ausgebildet, wobei das Navigationssystem weiterhin zur Speicherung zumindest einer dem Kraftfahrzeug, für das das Navigationssystem betrieben wird, zugeordneten Schadstoffklasse eingerichtet ist. Das Navigationssystem ist zur Berücksichtigung der schadstoffklassenabhängigen Durchfahrtsbeschränkungen für die Zone hinsichtlich der zumindest einen dem Kraftfahrzeug zugeordneten Schadstoffklasse ausgebildet, wobei eine Einfahrt in die und/oder eine Durchfahrt durch die Zone in den Fällen vermieden wird, in denen die zumindest eine Schadstoffklasse des Kraftfahrzeugs der Durchfahrtsbeschränkung entspricht. Das Navigationssystem ist weiter ein mobiles Navigationssystem ist und zum berührungslosen Auslesen der Schadstoffklasse aus einem fahrzeugseitigen Informationsspeicher ausgebildet. Durch ein solches Navigationssystem ist gewährleistet, dass die der Durchfahrtsbeschränkung entsprechenden Schadstoffklassen bzw. die diesen zugeordnete Kraftfahrzeuge nicht in die Zone (Umweltzone) einfahren, wodurch dem Fahrzeugführer die Einhaltung der gesetzlichen Bestimmungen erleichtert wird.

Weiterbildungen des erfindungsgemäßen Verfahrens sind in den abhängigen Patentansprüchen angegeben. Die dabei verwendeten Merkmale und deren Vorteile sind sinngemäß auch auf das erfindungsgemäße Navigationssystem anzuwenden.

In den Fällen, in denen das Fahrtziel innerhalb der Zone liegt, und die Zone aufgrund der dort geforderten Schadstoffklasse mit dem Kraftfahrzeug nicht befahren werden darf, kann vorteilhaft eine Zielführung zu einem Parkplatz (z.B. "Park-and-Ride"-Parkplatz, Busstation o.ä.) außerhalb der Zone erfolgen, wobei vorteilhaft ein möglichst nahes Navigieren an den gewünschten Zielort oder einen Ersatz-Zielort heran erfolgt. Ein solcher Ersatz-Zielort kann durch das Navigationssystem beispielsweise anhand der Fahrtzeiten (Fahrplan) und - kosten im öffentlichen Personennahverkehr (ÖPNV) ausgewählt werden. In den Fällen, in denen ein direkter Weg zum Fahrtziel durch eine Zone hindurch führt, wobei aufgrund der oder eine dem Kraftfahrzeug zugeordneten Schadstoffklasse diese Zone nicht befahren (durchfahren) werden darf, wird durch das Navigationssystem vorteilhaft eine Fahrtroute unter Vermeidung dieser Zone errechnet und diese für die Zielführung verwendet. Auch dadurch wird eine vorschriftswidrige Einfahrt in eine für das konkrete Kraftfahrzeug gesperrte Zone (Umweltzone) vermieden.

Eine bessere Steuerung von Verkehrsströmen kann erreicht werden, indem für die Zone zu unterschiedlichen Zeiten unterschiedliche Schadstoffklassen als Kriterium für die Durchfahrtsbeschränkung gelten, wobei in dem dritten Schritt die zur jeweiligen Fahrzeit geltenden schadstoffklassenbezogenen Durchfahrtsbeschränkungen berücksichtigt werden. Sofern diese zeitliche Abhängigkeit im Voraus feststeht bzw. einem festen zeitlichen Raster entspricht, können die in dem ersten Schritt eingegebenen Informationen mit einer Tageszeitabhängigkeit und/oder einer Wochentagsabhängigkeit oder anderen Zeitinformationen versehen werden, wobei in dem dritten Schritt die für die jeweilige Tageszeit bzw. den jeweiligen Wochentag geltende Angabe über die für die Durchfahrtsbeschränkung jeweils anzuwendende Schadstoffklasse berücksichtigt wird. Abgesehen von dieser zeitlichen Steuerung kann die Festsetzung der geforderten Schadstoffklasse (Mindest-Schadstoffklasse) auch "dynamisch" erfolgen, beispielsweise gesteuert durch die regelmäßige oder fortlaufende Messung der tatsächlichen (momentanen) Schadstoffbelastungen in der Zone. Dabei wird vorteilhaft eine Information über die zur jeweiligen Zeit geltende schadstoffklassenabhängige Durchfahrtsbeschränkung und/oder eine Information über eine Änderung derselben über einen funkbasierten Dienst an das Navigationssystem übermittelt und von diesem in einer Datenbasis gespeichert und für die Zielführung berücksichtigt. Dazu kann ein ähnliches oder dasselbe Funkverfahren wie für die Verkehrsnachrichten (TMC = Traffic Message Channel) verwendet werden.

Das Verfahren kann vorteilhaft für den Betrieb mit solchen Kraftfahrzeugen verwendet werden, die zum Betrieb in zumindest zwei unterschiedlichen Betriebsmodi eingerichtet sind, wobei jedem Betriebsmodus eine (eigene) Schadstoffklasse zugeordnet ist. Dazu wird beim Betrieb des Kraftfahrzeuges in einer Zone mit einer schadstoffklassenabhängigen Durchfahrtsbeschränkung gesteuert durch das Navigationssystem ein solcher Betriebsmodus gewählt, dessen zugeordnete Schadstoffklasse einen mit der Durchfahrtsbeschränkung konformen Betrieb vorsieht. Insbesondere kann dieses Verfahren vorteilhaft eingesetzt werden, wenn als das Kraftfahrzeug ein Hybridfahrzeug mit einem ersten Betriebsmodus für den Betrieb mit einem Verbrennungsmotor und einem zweiten Betriebsmodus für den Betrieb mit einem Elektromotor vorgesehen ist. Dabei wird durch das Navigationssystem bei Einfahrt des Kraftfahrzeugs in eine Zone, deren schadstoffklassenabhängige Durchfahrtsbeschränkung einen Betrieb des Kraftfahrzeugs im ersten Betriebsmodus nicht vorsieht, ein Steuerbefehl für die Antriebstechnik des Kraftfahrzeugs zur Umschaltung auf den zweiten Betriebsmodus ausgegeben. Vorteilhaft wird dabei die Verwendung des ersten Betriebsmodus so lange gesperrt, bis das Kraftfahrzeug aus der Zone ausfährt; weiterhin vorteilhaft ist dabei eine "Notfallschaltung" einzusetzen, die den ausnahmsweisen Betrieb des Verbrennungsmotors auch innerhalb der Zone ermöglicht. Durch dieses Verfahren ist es möglich, das Kraftfahrzeug außerhalb der Zone mittels des Verbrennungsmotors zu betreiben, wodurch die Batterien bzw. Akkumulatoren in solchen Bereichen des Verkehrswegenetzes aufgeladen werden können, in denen der Betrieb des Verbrennungsmotors möglich bzw. erlaubt ist. Andererseits können besonders sensible Bereiche, z.B. Umweltzonen mit starken Restriktionen ("Zero Emission Zones") wie Kurgebiete, Parkplätze und Wege auf dem Gelände von Krankenhäusern, Tiefgaragen, Fußgängerzonen o.ä., nahezu vollständig von kraftfahrzeugbedingten Emissionen freigehalten werden.

Vorteilhafterweise ist es auch möglich, mehrere Emissions-Arten zu berücksichtigen, wodurch beispielsweise in lärmsensiblen Zonen automatisch hohe Motordrehzahlen, die mit einer hohen Lärm-Emission verbunden sind, vermieden werden. In solchen Zonen können auch akustische Warneinrichtungen (Hupe, Horn, Sirene) entsprechend automatisch gedämpft werden, weil in lärmberuhigten Zonen die Hörbarkeit solcher akustischer Einrichtungen auch bei verringerter Lautstärke gegeben ist.

Ausführungsbeispiele des erfindungsgemäßen Verfahrens werden nachfolgend und anhand der Zeichnungen erläutert. Diese dienen gleichzeitig der Erläuterung eines Ausführungsbeispiels für ein erfindungsgemäßes Navigationssystem.

Dabei zeigt:
- Figur 1: in schematischer Darstellung ein Straßennetz mit Strassen, einem Kraftfahrzeug, einem Parkplatz, vier Verkehrsschildern und zwei Zielen,
- Figur 2: ein Verkehrschild für eine Umweltzone, und
- Figur 3: in schematischer Darstellung ein Kraftfahrzeug mit einem Navigationssystem, einem Motormanagementsystem und mit drei Satelliten eines Satelliten-Navigationssystems.

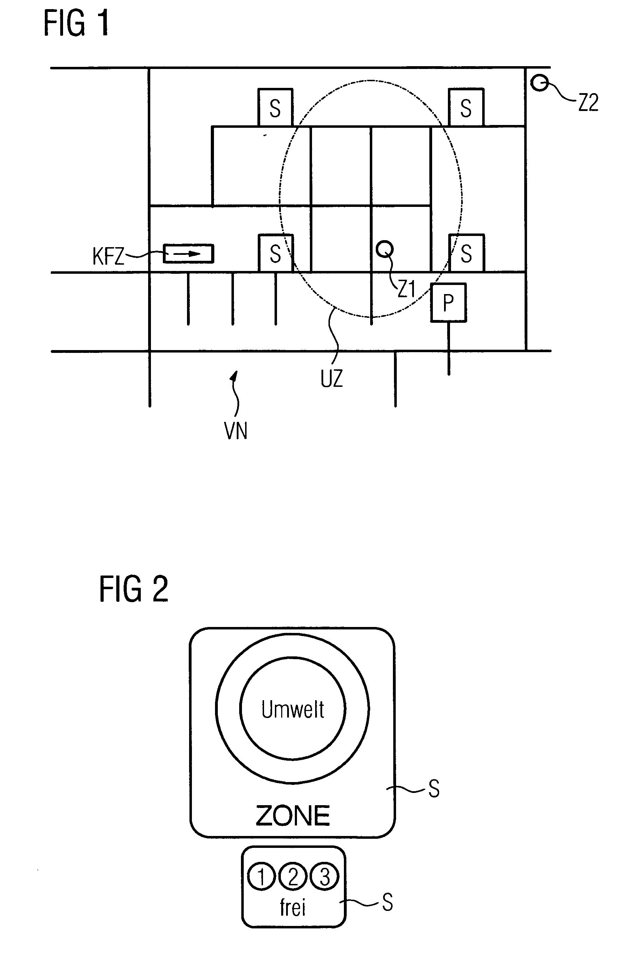

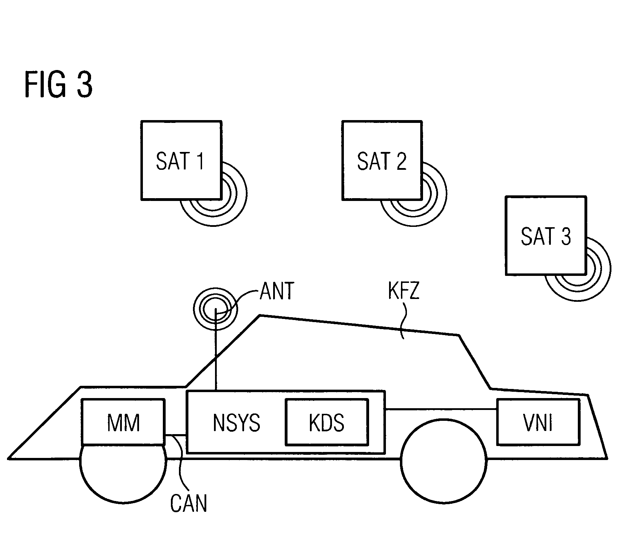

In der Figur 1 ist als Verkehrswegenetz ein Straßennetz VN mit einer Umweltzone UZ als Zone dargestellt. Das Straßennetz VN wird von einem Kraftfahrzeug KFZ befahren; das Kraftfahrzeug KFZ ist in der Figur 3 schematisch abgebildet. Über das Straßennetz VN sind ein Parkplatz P und die Ziele Z1, Z2 erreichbar. Dabei liegt das Ziel Z1 innerhalb und das Ziel Z2 außerhalb der Umweltzone UZ. Die Umweltzone UZ wird im realen Straßennetz VN durch Verkehrszeichen S gekennzeichnet; ein solches Verkehrszeichen S ist in der Figur 2 abgebildet.

Wie erwähnt, zeigt die Figur 2 exemplarisch ein Verkehrszeichen S, wobei mittels dieses Verkehrszeichens S Verkehrsteilnehmer darauf hingewiesen werden, dass an dieser Stelle die Durchfahrt für alle diejenigen Kraftfahrzeug beschränkt ist, die nicht bestimmte Schadstoffklassen aufweisen. Im vorliegenden Ausführungsbeispiel dürfen alle diejenigen Kraftfahrzeuge in die Zone einfahren, die den Schadstoffklassen 1, 2 oder 3 zugeordnet sind.

Die Figur 3 zeigt in schematischer Darstellung ein Kraftfahrzeug KFZ, welches mit einem Navigationssystem NSYS und einem Motormanagement-System MM ausgestattet ist. Das Navigationssystem NSYS und das Motormanagementsystem MM sind über einen Datenbus CAN miteinander verknüpft. Das Navigationssystem NSYS ist mit einer Satellitenempfangs-Antenne ANT zur Erfassung der Signale von Navigations-Satelliten SAT1, SAT2, SAT3 verbunden. Weiter verfügt das Navigationssystem NSYS über einen Konfigurationsdaten-Speicher KDS ("Kundendaten-Speicher") und ist über ein Datenkabel mit einem Datenspeicher VNI (Verkehrsnetzinformationen) verbunden, welches die Datenbasis ("Kartendaten") für das Straßennetz VN umfasst. Anstelle der hier dargestellten separaten Lösung kann die Datenbasis mit den Straßendaten des Verkehrswegenetzes (Straßennetz VN) auch in dem Navigationssystem NSYS integriert sein.

Im Folgenden wird als ein Ausführungsbeispiel eine navigationssystem-gestützte Fahrt des Kraftfahrzeugs KFZ zu dem Ziel Z1 beschrieben, wobei sich das Kraftfahrzeug KFZ zu Beginn der Fahrt außerhalb der Umweltzone UZ befindet, während sich das Ziel Z1 innerhalb der Umweltzone Z1 befindet. Dem Kraftfahrzeug KFZ ist die Schadstoffklasse "0" zugeordnet; dieser Wert ist beim Einbau des Navigationssystems NSYS in die Datenbasis KDS eingegeben worden. Alternativ kann diese Information über die Schadstoffklasse auch einmalig oder wiederkehrend über den Datenbus CAN aus dem Motormanagement-System MM ausgelesen werden.

Erfindungsgemäß ist das Navigationssystem NSYS als mobiles Gerät ausgeführt. Dort kann neben der bereits geschilderten manuellen Eingabe durch einen Benutzer des Kraftfahrzeugs die Information über die Schadstoffklasse auch aus einem anderen Informationsspeicher als dem Motormanagement-System MM ausgelesen werden, beispielsweise drahtlos aus einem mit dem Fahrzeug verbundenen RFID-Transponder, der in diesem Ausführungsbeispiel in eine sog. "Schadstoffplakette" eingearbeitet ist, die von einer Zulassungsbehörde dem Kraftfahrzeug KFZ zugeteilt wurde und auf diesem (beispielsweise im Bereich der Windschutzscheibe) aufgeklebt wurde. In einer weiteren alternativen Ausführungsform kann diese Plakette auch mit einer maschinenlesbaren Beschriftung, beispielsweise Barcode, versehen sein, die von dem Navigationssystem NSYS optisch erfasst wird.

Der Datenspeicher VNI ist in diesem Ausführungsbeispiel auf einer wieder beschreibbaren Speicherkarte gespeichert, welche mit dem Navigationssystem NSYS verbunden ist; selbstverständlich kommen auch andere Speichermedien wie z.B. DVD (Digital Versatile Disc) in Frage. In einer alternativen Ausführungsform kann das Navigationssystem NSYS auch drahtlos, beispielsweise über eine GSM-Mobilfunkverbindung, auf solche Straßendaten zugreifen, die an einer zentralen Stelle gespeichert sind.

In dem Datenspeicher VNI (elektronische Straßenkarte) sind auch Informationen über die geografische Lage der Umweltzone UZ bzw. diejenigen Straßen/Straßen-Abschnitte gespeichert, die zu der Umweltzone UZ gehören. Im vorliegenden Ausführungsbeispiel sind die Informationen über die Umweltzone UZ in der "elektronischen Straßenkarte" also in dem Datenspeicher VNI integriert und von deren Hersteller mitgeliefert worden. Alternativ können jedoch auch diese Informationen separat in einem anderen Datenspeicher des Navigationssystems NSYS gespeichert sein. Das gilt insbesondere für solche Ausführungsbeispiele, in denen die geografische Lage der Umweltzone UZ und/oder die dort "erlaubten" bzw. "verbotenen" Schadstoffklassen "dynamisch" sind, also einer zeitlichen Änderung unterworfen sind. Dazu können diese Informationen über die Umweltzone UZ auch über einen digitalen Verkehrsfunk ("TMC") oder eine andere drahtlose Verbindung regelmäßig oder bei Bedarf in das Navigationssystem NSYS eingespielt werden. Die Informationen über die Umweltzone UZ können auch mit zeitlichen Bedingungen verknüpft sein, beispielsweise derart, dass an Wochenenden die Schadstoffklassen 1, 2 und 3 in die Umweltzone UZ einfahren dürfen, während wochentags beispielsweise nur Kraftfahrzeuge KFZ mit der Schadstoffklasse 3 (oder besser) in der Umweltzone UZ betrieben werden dürfen.

Im Folgenden sei angenommen, dass das Kraftfahrzeug KFZ die Schadstoffklasse "0" aufweist, was bedeutet, dass die dargestellte Umweltzone UZ nicht befahren werden darf, weil dort nur Fahrzeuge mit den höherwertigen Schadstoffklassen 1, 2 oder 3 (oder besser) betrieben werden dürfen. Das Navigationssystem NSYS stellt bei der Planung der Route zum gewünschten Fahrtziel Z1 fest, dass die Schadstoffklasse "0" zum direkten Erreichen des Ziels nicht ausreicht, so dass der dem Fahrtziel Z1 nächstgelegene Parkplatz P als "Ausweichziel" gewählt wird. Die Fahrtroute zu dem Parkplatz P wird dabei derart gewählt, dass ein Einfahren bzw. Durchfahren der Umweltzone UZ vermieden wird. Falls der Führer des Kraftfahrzeugs KFZ auf den Einsatz des Navigationssystems NSYS im Sinne einer Wegführung verzichtet, meldet das Navigationssystem NSYS bei dem Versuch, in die Umweltzone UZ einzufahren, dem Fahrer dem Umstand, dass er in Begriff ist, die Durchfahrtsbeschränkung der Umweltzone UZ zu verletzen. Optional kann eine Empfehlung für eine günstige Weiterfahrt mit öffentlichen Verkehrsmitteln und einen geeigneten Parkplatz ausgegeben werden.

In einem weiteren, ähnlich gelagerten Ausführungsbeispiel, liegt das Fahrtziel Z2 nunmehr außerhalb der Umweltzone UZ, wobei jedoch der verkehrsgünstigste Weg vom derzeitigen Standort des Kraftfahrzeuges KFZ zu dem Fahrtziel Z2 durch die Umweltzone UZ führt. Bei der Routenplanung wird durch das Navigationssystem NSYS jedoch die Durchfahrtsbeschränkung berücksichtigt, so dass dem Fahrer des Kraftfahrzeuges KFZ eine alternative Zielführung angeboten wird, die um die Umweltzone UZ herum führt, so dass der Durchfahrtsbeschränkung Folge geleistet wird.

In einem alternativen Ausführungsbeispiel sei angenommen, dass es sich bei dem Kraftfahrzeug KFZ um ein Hybridfahrzeug handelt, welches in einem Betriebsmodus mit eingeschaltetem Verbrennungsmotor die Schadstoffklasse "3" erfüllt, während im rein elektrischen Betriebsmodus eine Schadstoffklasse "Z" ("Zero") erreicht wird, was bedeutet, dass keine gasförmigen Emissionen ausgestoßen werden. Weiter sei für dieses Ausführungsbeispiel angenommen, dass die Umweltzone UZ nur mit Kraftfahrzeugen der Schadstoffklasse "4" (oder besser) befahren werden darf. Das Navigationssystem NSYS ist beim Auslesen des Fahrzeugmanagement-Systems des Kraftfahrzeugs KFZ mit der Information versorgt worden, dass es sich um ein Hybridfahrzeug mit den betriebsmodusabhängigen Schadstoffklassen "3" und "Z" handelt. In einem interaktiven Benutzerdialog ist das Navigationssystem NSYS weiterhin mit einer Information darüber versorgt worden, wie hoch die Reichweite des Kraftfahrzeugs KFZ im rein elektrischen Betriebsmodus ist; diese Information kann alternativ auch automatisch aus einem Fahrzeugmanagement-System des Kraftfahrzeugs KFZ ausgegeben werden.

Bei der Wegberechnung für das Kraftfahrzeug KFZ zum Fahrziel Z1 berücksichtigt nun das Navigationssystem NSYS diese Angaben, wobei es feststellt, dass die Umweltzone UZ nur im elektrischen Betriebsmodus befahren werden kann, weil im Betriebsmodus mit Verbrennungsmaschine eine Schadstoffklasse "3" für das Kraftfahrzeug KFZ gilt, welche von der Durchfahrtsbeschränkung betroffen ist. Weiterhin stellt das Navigationssystem NSYS fest, dass die Reichweite der Akkumulatoren des elektrischen Antriebs für eine Erreichung des Fahrziels Z1 und für eine Rückkehr in das Verkehrswegenetz außerhalb der Umweltzone UZ ausreicht. Das Navigationssystem NSYS teilt diesen Umstand dem Benutzer (Fahrzeugführer) mit und gibt mit Erreichen der Umweltzone UZ einen Steuerbefehl an das Fahrzeugmanagement-System, welcher eine Umschaltung auf den rein elektrischen Betriebsmodus bewirkt. Die damit verbundene "Sperre" des Verbrennungsantriebs wird durch einen entsprechenden Befehl des Navigationssystems NSYS aufgehoben, sobald das Kraftfahrzeug KFZ die Umweltzone UZ wieder verlässt.

Anstelle einer "harten" Umschaltung auf einen elektrischen Betriebsmodus kann je nach gefordertem Emissions-Grenzwert auch eine Reduzierung einer Motorleistung der Verbrennungsmaschine, eine Drehzahl-Reduzierung oder eine andere technische Maßnahme automatisch eingeleitet werden, um die tatsächlichen (momentanen) Emissionen zu verringern.

## Patentansprüche

1. Verfahren für den Betrieb eines Navigationssystems (NSYS) für ein Kraftfahrzeug (KFZ) in einem Verkehrswegenetz (VN), wobei zumindest eine Zone (UZ) des Verkehrswegenetzes (VN) mit einer schadstoffklassenabhängigen Durchfahrtsbeschränkung versehen ist,
wobei dem Kraftfahrzeug (KFZ) zumindest eine Schadstoffklasse (1, 2, 3) zugeordnet ist,
wobei
- in einem ersten Schritt in einer ersten Datenbasis (VNI) des Navigationssystems (NSYS) Informationen über die geografische Lage der zumindest einen Zone (Uz)und über die für die Durchfahrt berechtigten Kraftfahrzeuge (KFZ) in dieser Zone (UZ) zumindest geforderte Schadstoffklasse (1, 2, 3) gespeichert werden,
- in einem zweiten Schritt in einer zweiten Datenbasis (VNI) des Navigationssystems (NSYS) eine Information über die zumindest eine Schadstoffklasse (1, 2, 3) des Kraftfahrzeugs (KFZ) mit dem Navigationssystem (NSYS) eingegeben wird, und
- in einem dritten Schritt die in dem ersten und dem zweiten Schritt eingegebenen Informationen für die Zielführung berücksichtigt werden,
wobei eine Zielführung in oder durch die Zone (UZ) vermieden wird, sofern die zumindest eine Schadstoffklasse (1, 2, 3) des Kraftfahrzeugs (KFZ) von schadstoffklassenabhängigen Durchfahrtsbeschränkungen in der Zone (UZ) betroffen ist,
**dadurch gekennzeichnet, dass**
in dem zweiten Schritt die Schadstoffklasse (1, 2, 3) aus einem fahrzeugseitigen Informationsspeicher in das Navigationssystem (NSYS) übertragen wird,
wobei als das Navigationssystem (NSYS) ein mobiles Navigationssystem (NSYS) verwendet wird und dass die Information über die zumindest eine Schadstoffklasse (1, 2, 3) durch das Navigationssystem (NSYS) berührungslos aus dem fahrzeugseitigen Informationsspeicher ausgelesen wird.

2. Verfahren nach Patentanspruch 1,
**dadurch gekennzeichnet, dass**
neben dem berührungslosen Auslesen der Information über die zumindest eine Schadstoffklasse (1, 2, 3) durch das Navigationssystem (NSYS) aus dem fahrzeugseitigen Informationsspeicher die Schadstoffklasse (1, 2, 3) des Kraftfahrzeugs (KFZ) manuell in das Navigationssystem (NSYS) eingegeben wird.

3. Verfahren nach einem der vorhergehenden Patentansprüche,
**dadurch gekennzeichnet, dass**
neben dem berührungslosen Auslesen der Information über die zumindest eine Schadstoffklasse (1, 2, 3) durch das Navigationssystem (NSYS) aus dem fahrzeugseitigen Informationsspeicher die zumindest eine dem Kraftfahrzeug (KFZ) zugeordnete Schadstoffklasse (1, 2, 3), die in einem Motormanagement-System (MM) oder Fahrzeugmanagement-System des Kraftfahrzeugs (KFZ) gespeichert ist, über einen kraftfahrzeugseitigen Datenbus an das Navigationssystem (NSYS) übertragen wird.

4. Verfahren nach einem der vorhergehenden Patentansprüche,
**dadurch gekennzeichnet, dass**
als der fahrzeugseitige Informationsspeicher eine mit einem Transpondersystem versehene Plakette verwendet wird, aus der die Information über die zumindest eine Schadstoffklasse (1, 2, 3) berührungslos ausgelesen wird.

5. Verfahren nach einem der vorhergehenden Patentansprüche,
**dadurch gekennzeichnet, dass**
in dem dritten Schritt in den Fällen, in denen ein Fahrtziel (Z1) innerhalb der Zone (UZ) liegt und die Zone (UZ) aufgrund der dort geforderten Schadstoffklasse (1, 2, 3) mit dem Kraftfahrtzeug nicht befahren werden darf, eine Zielführung zu einem Parkplatz außerhalb der Zone (UZ) erfolgt.

6. Verfahren nach einem der Patentansprüche 1 bis 4,
**dadurch gekennzeichnet, dass**
in den Fällen, in denen ein direkter Weg zu einem Fahrtziel (Z2) durch eine Zone (UZ) führt, wobei aufgrund der oder einer dem Kraftfahrzeug (KFZ) zugeordneten Schadstoffklasse (1, 2, 3) diese Zone (UZ) nicht befahren werden darf, durch das Navigationssystem (NSYS) eine Fahrtroute unter Vermeidung dieser Zone (UZ) errechnet und diese für die Zielführung verwendet wird.

7. Verfahren nach einem der vorhergehenden Patentansprüche,
**dadurch gekennzeichnet, dass**
für die Zone (UZ) zu unterschiedlichen Zeiten unterschiedliche Schadstoffklassen (1, 2, 3) als Kriterium für die Durchfahrtsbeschränkung gelten, wobei in dem dritten Schritt die zur jeweiligen Fahrtzeit geltende schadstoffklassenbezogene Durchfahrtsbeschränkung berücksichtigt wird.

8. Verfahren nach Patentanspruch 7,
**dadurch gekennzeichnet, dass**
eine Information über die zur jeweiligen Zeit geltende schadstoffklassenabhängige Durchfahrtsbeschränkung und/oder eine Information über eine Änderung derselben über einen funkbasierten Dienst an das Navigationssystem (NSYS) übermittelt und von diesem in einer Datenbasis (VNI) eingespeichert und für die Zielführung berücksichtigt wird.

9. Verfahren nach einem der vorhergehenden Patentansprüche,
**dadurch gekennzeichnet, dass**
das Kraftfahrzeug (KFZ) zum Betrieb in zumindest zwei unterschiedlichen Betriebsmodi eingerichtet ist,
wobei jedem Betriebsmodus eine Schadstoffklasse (1, 2, 3) zugeordnet ist und
wobei beim Betrieb des Kraftfahrzeugs (KFZ) in einer Zone (UZ) mit schadstoffklassenabhängiger Durchfahrtsbeschränkung ein solcher Betriebsmodus gewählt wird, dessen zugeordnete Schadstoffklasse (1, 2, 3) einen mit der Durchfahrtsbeschränkung konformen Betrieb vorsieht.

10. Verfahren nach Patentanspruch 9,
**dadurch gekennzeichnet, dass**
als das Kraftfahrzeug (KFZ) ein Hybridfahrzeug mit einem ersten Betriebsmodus für den Betrieb mit einem Verbrennungsmotor und einem zweiten Betriebsmodus für den Betrieb mit einem Elektromotor vorgesehen ist,
wobei durch das Navigationssystem (NSYS) bei Einfahrt des Kraftfahrzeugs (KFZ) in eine Zone (UZ), deren schadstoffklassenabhängige Durchfahrtsbeschränkung einen Betrieb des Kraftfahrzeuges (KFZ) im ersten Betriebsmodus nicht vorsieht, ein Steuerbefehl für die Antriebstechnik des Kraftfahrzeuges (KFZ) zur Umschaltung auf den zweiten Betriebsmodus ausgegeben wird.

11. Verfahren nach Patentanspruch 10,
**dadurch gekennzeichnet, dass**
die Verwendung des ersten Betriebsmodus so lange gesperrt wird, bis das Kraftfahrzeug (KFZ) aus der Zone (UZ) ausfährt.

12. Verfahren nach einem der vorhergehenden Patentansprüche,
**dadurch gekennzeichnet, dass**
die in dem ersten Schritt eingegebenen Informationen mit einer Tageszeitabhängigkeit und/oder einer Wochentagsabhängigkeit versehen sind,
wobei in dem dritten Schritt die für die jeweilige Tageszeit bzw. den jeweiligen Wochentag geltende Angabe über die für die Durchfahrtsbeschränkung anzuwendende Schadstoffklasse (1, 2, 3) berücksichtigt wird.

13. Navigationssystem (NSYS) für ein Kraftfahrzeug (KFZ),
mit einer Datenbasis (VNI) für ein Verkehrswegenetz (VN), wobei
das Navigationssystem (NSYS) zur Speicherung zumindest einer schadstoffklassenabhängigen Durchfahrtsbeschränkung für zumindest eine Zone (UZ) des Verkehrswegenetzes (VN) ausgebildet ist,
dass das Navigationssystem (NSYS) zur Speicherung zumindest einer dem Kraftfahrzeug (KFZ), in dem das Navigationssystem (NSYS) betrieben wird, zugeordneten Schadstoffklasse (1, 2, 3) eingerichtet ist, und
dass das Navigationssystem (NSYS) zur Berücksichtigung der schadstoffklassenabhängigen Durchfahrtsbeschränkung für die Zone (UZ) hinsichtlich der zumindest einen dem Kraftfahrzeug (KFZ) zugeordneten Schadstoffklasse (1, 2, 3) ausgebildet ist,
wobei eine Einfahrt in die und/oder eine Durchfahrt durch die Zone (UZ) in den Fällen vermieden wird, in denen die zumindest eine Schadstoffklasse (1, 2, 3) des Kraftfahrzeugs (KFZ) der Durchfahrtsbeschränkung entspricht,
**dadurch gekennzeichnet, dass**
das Navigationssystem (NSYS) ein mobiles Navigationssystem ist und zum berührungslosen Auslesen der Schadstoffklasse (1, 2, 3) aus einem fahrzeugseitigen Informationsspeicher ausgebildet ist.

## Claims

1. A method for operating a navigation system (NSYS) for a motor vehicle (KFZ) in a road network (VN), with at least one zone (UZ) of the road network (VN) being provided with an emissions class-dependent transit restriction and with the motor vehicle (KFZ) being associated with at least one emissions class (1, 2, 3), wherein
- in a first step, information is stored in a first database (VNI) of the navigation system (NSYS) about the geographical location of the at least one zone (Uz) and about the minimum emissions class (1, 2, 3) that is required for the transit of entitled motor vehicles (KFZ) in that zone (UZ),
- in a second step, information is entered in a second database (VNI) of the navigation system (NSYS) about the at least one emissions class (1, 2, 3) of the motor vehicle (KFZ) with the navigation system (NSYS), and
- in a third step, the information entered in the first and the second step is taken into consideration for the route guidance, with a route guidance into or through the zone (UZ) being avoided if the at least one emissions class (1, 2, 3) of the motor vehicle (KFZ) is subject to emissions class-dependent transit restrictions in the zone (UZ), **characterised in that**
in the second step, the emissions class (1, 2, 3) is sent from a vehicle-borne information memory to the navigation system (NSYS), with a mobile navigation system (NSYS) being used as the navigation system (NSYS), and **in that** the information about the at least one emissions class (1, 2, 3) is read out contactlessly by the navigation system (NSYS) from the vehicle-borne information memory.

2. The method of claim 1 wherein as well as the contactless readout of the information about the at least one emissions class (1, 2, 3) by the navigation system (NSYS) from the vehicle-borne information memory, the emissions class (1, 2, 3) of the motor vehicle (KFZ) is manually entered into the navigation system (NSYS).

3. The method of any one of the preceding claims wherein as well as the contactless readout of the information about the at least one emissions class (1, 2, 3) by the navigation system (NSYS) from the vehicle-borne information memory, the at least one emissions class (1, 2, 3) associated with the motor vehicle (KFZ) and stored in an engine management system (MM) or vehicle management system of the motor vehide (KFZ) is sent to the navigation system (NSYS) over a motor-vehicle-borne data bus.

4. The method of any one of the preceding claims wherein a sticker provided with a transponder system and from which the information about the at least one emissions class (1, 2, 3) is contactlessly read out, is used as the vehicle-borne information memory.

5. The method of any one of the preceding claims wherein in the third step, in cases in which a destination (Z1) lies inside the zone (UZ) but the motor vehicle may not enter the zone (UZ) because of the required emissions class (1, 2, 3), a route guidance to a parking place outside the zone (UZ) is effected.

6. The method of any one of daims 1 to 4 wherein in cases in which a direct route leads to a destination (Z2) through a zone (UZ) but because of the or an emissions class (1, 2, 3) associated with the motor vehide (KFZ) this zone (UZ) may not be entered, the navigation system (NSYS) computes a route which avoids this zone (UZ) and said route is used for the route guidance.

7. The method of any one of the preceding claims wherein different emissions classes (1, 2, 3) apply at different times as a criterion for the transit restriction for the zone (UZ), with the emissions class-dependent transit restriction which applies to the respective journey time being taken into consideration in the third step.

8. The method of claim 7 wherein information about the emissions class-dependent transit restriction applicable to the respective time, and/or information about a change to the same, is sent by a radio-based service to the navigation system (NSYS) and stored by the latter in a database (VNI) and taken into consideration for the route guidance.

9. The method of any one of the preceding claims wherein the motor vehicle (KFZ) is equipped for operation in at least two different operating modes, with each operating mode being associated with an emissions class (1, 2, 3) and wherein, when the motor vehicle (KFZ) is operated in a zone (UZ) with emissions class-dependent transit restriction, an operating mode is selected whose associated emissions class (1, 2, 3) provides for an operation which conforms to the transit restriction.

10. The method of claim 9 wherein a hybrid vehicle having a first operating mode for operation with an internal combustion engine and a second operating mode for operation with an electric motor is provided as the motor vehicle (KFZ), with the navigation system (NSYS) outputting a control command for the drive mechanism of the motor vehide (KFZ) to switch over to the second operating mode when the motor vehicle (KFZ) enters a zone (UZ) whose emissions class-dependent transit restriction does not provide for an operation of the motor vehide (KFZ) in the first operating mode.

11. The method of claim 10 wherein the use of the first operating mode is disabled until the motor vehicle (KFZ) leaves the zone (UZ).

12. The method of any one of the preceding claims wherein the information entered in the first step is provided with a time-of-day dependence and/or with a day-of-the-week dependence, with the indication, applicable to the time of day or day of the week, of the emissions class (1, 2, 3) which is to be applied to the transit restriction being taken into consideration in the third step.

13. A navigation system (NSVS) for a motor vehicle (KFZ), having a database (VNI) for a road network (VN), the navigation system (NSYS) being configured for the storage of at least one emissions class-dependent transit restriction for at least one zone (UZ) of the road network (VN), the navigation system (NSYS) being equipped for the storage of at least one emissions class (1, 2, 3) associated with the motor vehicle (KFZ) in which the navigation system (NSYS) is operated, and the navigation system (NSYS) being configured to take into consideration the emissions class-dependent transit restriction for the zone (UZ) in regard to the at least one emissions class (1, 2, 3) associated with the motor vehicle (KFZ), with an entry into and/or a transit through the zone (UZ) being avoided in cases in which the at least one emissions class (1, 2, 3) of the motor vehicle (KFZ) matches the transit restriction, wherein the navigation system (NSYS) is a mobile navigation system and is configured for the contactless readout of the emissions class (1, 2, 3) from a vehicle-borne information memory.

## Revendications

1. Procédé pour le fonctionnement d'un système de navigation (NSYS) pour un véhicule automobile (KFZ) dans un réseau de voies de circulation (VN), sachant qu'au moins une zone (UZ) du réseau de voies de circulation (VN) est pourvue d'une limitation de traversée dépendant de la catégorie de pollution,
sachant qu'au moins une catégorie de pollution (1, 2, 3) est associée au véhicule automobile (KFZ),
sachant
- que des informations concernant la position géographique de la zone (Uz) au moins au nombre de une et concernant la catégorie de pollution (1, 2, 3) au moins exigée dans cette zone (UZ) pour les véhicules automobiles (KFZ) autorisés à la traverser sont enregistrées lors d'une première étape, dans une première base de données (VNI) du système de navigation (NSYS),
- qu'une information concernant la catégorie de pollution (1, 2, 3) au moins au nombre de une du véhicule automobile (KFZ) est saisie à l'aide du système de navigation (NSYS) lors d'une deuxième étape, dans une deuxième base de données (VNI) du système de navigation (NSYS), et
- que les informations saisies lors de la première et de la deuxième étape sont prises en compte pour le guidage routier lors de la troisième étape,
sachant qu'un guidage routier est évité dans ou par la zone (UZ) dans la mesure où la catégorie de pollution (1, 2, 3) au moins au nombre de une du véhicule automobile (KFZ) est concernée par des limitations de traversée dépendant de la catégorie de pollution dans la zone (UZ),
**caractérisé en ce**
**que** la catégorie de pollution (1, 2, 3) est transmise d'une mémoire d'informations côté véhicule dans le système de navigation (NSYS) lors de la deuxième étape,
sachant qu'on utilise comme système de navigation (NSYS) un système de navigation (NSYS) mobile et que l'information concernant la catégorie de pollution (1, 2, 3) au moins au nombre de une est lue par le système de navigation (NSYS) sans contact à partir de la mémoire d'informations côté véhicule.

2. Procédé selon la revendication 1,
**caractérisé en ce**
**qu'**outre la lecture sans contact de l'information concernant la catégorie de pollution (1, 2, 3) au moins au nombre de une par le système de navigation (NSYS) à partir de la mémoire d'informations côté véhicule, la catégorie de pollution (1, 2, 3) du véhicule automobile (KFZ) est saisie manuellement dans le système de navigation (NSYS).

3. Procédé selon l'une quelconque des revendications précédentes, **caractérisé en ce**
**qu'**outre la lecture sans contact de l'information concernant la catégorie de pollution (1, 2, 3) au moins au nombre de une par le système de navigation (NSYS) à partir de la mémoire d'information côté véhicule, la catégorie de pollution (1, 2, 3) au moins au nombre de une associée au véhicule automobile (KFZ), qui est enregistrée dans un système de gestion de moteur (MM) ou dans un système de gestion de véhicule du véhicule automobile (KFZ), est transmise au système de navigation (NSYS) par l'intermédiaire d'un bus de données côté véhicule automobile.

4. Procédé selon l'une quelconque des revendications précédentes, **caractérisé en ce**
**qu'**on utilise en tant que mémoire d'informations côté véhicule une plaquette dotée d'un système de transpondeur, à partir de laquelle l'information concernant la catégorie de pollution (1, 2, 3) au moins au nombre de une est lue sans contact.

5. Procédé selon l'une quelconque des revendications précédentes, **caractérisé en ce**
**qu'**un guidage routier en direction d'une aire de stationnement en dehors de la zone (UZ) est effectué lors de la troisième étape dans les cas où une destination (Z1) se trouve dans la zone (UZ) et que la zone (UZ) ne doit pas être traversée avec le véhicule automobile du fait de la catégorie de pollution (1, 2, 3) exigée à cet endroit.

6. Procédé selon l'une quelconque des revendications 1 à 4,
**caractérisé en ce**
**que** dans les cas où une voie directe menant à une destination (Z2) mène à travers une zone (UZ), sachant que ladite zone (UZ) ne peut être traversée du fait de la ou d'une catégorie de pollution (1, 2, 3) associée au véhicule automobile (KFZ), un itinéraire est calculé par le système de navigation (NSYS) en évitant ladite zone (UZ) et est utilisé pour le guidage routier.

7. Procédé selon l'une quelconque des revendications précédentes,
**caractérisé en ce**
**que** diverses catégories de pollution (1, 2, 3) s'appliquent comme critères pour la limitation de traversée pour la zone (UZ) à différentes moments, sachant qu'on tient compte de la limitation de traversée en rapport avec la catégorie de pollution s'appliquant à un temps de trajet donné lors de la troisième étape.

8. Procédé selon la revendication 7,
**caractérisé en ce**
**qu'**une information concernant la limitation de traversée dépendant de la catégorie de pollution s'appliquant à un moment donné et/ou une information concernant une modification de cette dernière est transmise par l'intermédiaire d'un service par radio au système de navigation (NSYS), est enregistrée par ce dernier dans une base de données (VNI) et est prise en compte pour le guidage routier.

9. Procédé selon l'une quelconque des revendications précédentes,
**caractérisé en ce**
**que** le véhicule automobile (KFZ) est prévu pour fonctionner dans au moins deux modes de fonctionnement différents,
sachant qu'une catégorie de pollution (1, 2, 3) est associée à chaque mode de fonctionnement, et
sachant que lors du fonctionnement du véhicule automobile (KFZ) dans une zone (UZ) dotée d'une limitation de traversée dépendant de la catégorie de pollution, on choisit le mode de fonctionnement dont la catégorie de pollution (1, 2, 3) associée prévoit un fonctionnement conforme à la limitation de traversée.

10. Procédé selon la revendication 9,
**caractérisé en ce**
**qu'**est prévu en tant que véhicule automobile (KFZ) un véhicule hybride présentant un premier mode de fonctionnement pour le fonctionnement avec un moteur à combustion interne et présentant un deuxième mode de fonctionnement pour le fonctionnement avec un moteur électrique,
sachant qu'une instruction pour la technique d'entraînement du véhicule automobile (KFZ) est émise pour la commutation sur le deuxième mode de fonctionnement par le système de navigation (NSYS) lors de l'entrée du véhicule automobile (KFZ) dans une zone (UZ) dont la limitation de traversée dépendant de la catégorie de pollution ne prévoit pas un fonctionnement du véhicule automobile (KFZ) dans le premier mode de fonctionnement.

11. Procédé selon la revendication 10,
**caractérisé en ce**
**que** l'utilisation du premier mode de fonctionnement est bloquée jusqu'à ce que le véhicule automobile (KFZ) quitte la zone (UZ).

12. Procédé selon l'une quelconque des revendications précédentes,
**caractérisé en ce**
**que** des informations saisies lors de la première étape sont dotées d'une dépendance à l'heure de la journée et/ou d'une dépendance au jour de la semaine,
sachant qu'on tient compte lors de la troisième étape de l'indication, s'appliquant pour une heure donnée et/ou pour un jour de la semaine donné, concernant la catégorie de pollution (1, 2, 3) à appliquer pour la limitation de traversée.

13. Système de navigation (NSYS) pour un véhicule automobile (KFZ), comprenant une base de données (VNI) pour un réseau de voies de circulation (VN),
sachant
que le système de navigation (NSYS) est réalisé aux fins de l'enregistrement d'au moins une limitation de traversée dépendant de la catégorie de pollution pour au moins une zone (UZ) du réseau de voies de circulation (VN),
que le système de navigation (NSYS) est mis en place pour enregistrer au moins une catégorie de pollution (1, 2, 3) associée au véhicule automobile (KFZ) dans lequel fonctionne le système de navigation (NSYS), et
que le système de navigation (NSYS) est réalisé pour tenir compte de la limitation de traversée dépendant de la catégorie de pollution pour la zone (UZ) eu égard à la catégorie de pollution (1, 2, 3) au moins au nombre de une associée au véhicule automobile (KFZ),
sachant qu'une entrée dans la zone (UZ) et/ou une traversée de la zone (UZ) sont évitées dans les cas où la catégorie de pollution (1, 2, 3) au moins au nombre de une du véhicule automobile (KFZ) correspond à la limitation de traversée,
**caractérisé en ce**
**que** le système de navigation (NSYS) est un système de navigation mobile et est réalisé pour lire sans contact la catégorie de pollution (1, 2, 3) à partir de la mémoire d'informations côté véhicule.
